Europäisches Patentamt

European Patent Office

Office européen des brevets

(19)

(11) Publication number: **0 047 984**

**A1**

(12) **EUROPEAN PATENT APPLICATION**

(21) Application number: **81107138.0**

(22) Date of filing: **10.09.81**

(51) Int. Cl.³: **B 29 C 1/00**

(30) Priority: **12.09.80 US 186568**

(43) Date of publication of application:
**24.03.82 Bulletin 82/12**

(84) Designated Contracting States:
**BE CH DE FR GB IT LI NL SE**

(71) Applicant: **E.I. DU PONT DE NEMOURS AND COMPANY**
**Legal Department 1007 Market Street**
**Wilmington Delaware 19898(US)**

(72) Inventor: **Himelreich, Louis Eugene, Jr.**
**2806 Kennedy Road**
**Wilmington Delaware 19810(US)**

(74) Representative: **von Kreisler, Alek, Dipl.-Chem. et al,**
**Deichmannhaus am Hauptbahnhof**
**D-5000 Köln 1(DE)**

(54) **O-ring mold for perfluoroelastomers.**

(57) Improved O-ring mold, designed to reduce or eliminate backrinding, wherein the flash channel (3, 4) connecting the O-ring cavity (2) and the flash cavity (5) has an enlarged portion (3) adjacent to the O-ring cavity (2).

FIG. I

EP 0 047 984 A1

- 1 -

## Title

O-RING MOLD FOR PERFLUOROELASTOMERS

## Description

### Technical Field

This invention relates to an improved O-ring mold preferably intended for use in the preparation of O-rings made of perfluoroelastomers, and to the improved method of making such O-rings using the improved mold of the present invention. In particular, the present invention relates to such an improved mold for use in the preparation of O-rings and a method of using the same, which mold and method are specially adapted to reduce or eliminate backrinding

### Background Art

The art of compression molding of O-rings is old and highly developed. However, as new extra high performance materials are developed to deal with sealing problems previously unsolved, the possibility of practical problems associated with the preparation of O-rings from such extra high performance materials exists. One such example is with materials of the type described in detail by Kalb et al. in "Polymerization Reactions and New Polymers", Advances in Chemistry Series, No. 129, pages 13-26 (1973) or as described by Breazeale in copending U.S. Patent Application No. 83,751. Materials such as those described in these references provide extraordinary resistance to chemical and environmental attack, which resistance renders such materials ideally suited for use in O-rings where such extraordinary conditions are likely to be encountered and where, previously, there had been no satisfactory materials capable of surviving such extraordinary attack for any significant length of time.

- 1 -

- 2 -

Conventional molds for use in preparing O-rings are shown, for example, in U.S. Patent No. 2,148,079, granted February 21, 1939 to Martin. FIG. 2 in Martin shows a configuration that has become common today namely an O-ring cavity with an enlarged flash cavity near, but not next to, the O-ring cavity. This configuration permits hand stripping the flashing from the finished O-rings.

It has been found, however, that when compression molding certain materials; such as those disclosed by Kalb et al. and Breazeale, in conventional molds such as those disclosed by Martin, backrinding becomes a significant problem and results in an unacceptably high number of rejects. Backrinding refers to the distortion at the mold line, usually in the form of wrinkles, folds, tears or indentations (see e.g., ASTM Special Technical Publication No. 184, Glossary of Terms Relating to Rubber and Rubber-like Materials) The cause of backrinding can vary, and solutions to this problem have been equally varied (see, e.g., Mechanical Molded Goods, Neoprene and "Hypalon", D.C. Thompson, Elastomers Division, E. I. du Pont de Nemours and Company, pages 25-26, 84-85 (1955); Backrinding of Molded Products, Embert L. Stangor, Rubber Age, vol. 60, pages 439-42 (1947); or Fluoroelastomers, R. G. Arnold et al., Rubber Chemistry and Technology, vol. 46, page 641-2 (1973)).

While the references mentioned above offer various solutions to the problem of backrinding, none have been completely satisfactory, and none have been directed to the problem of backrinding as it exists in the compression molding of O-rings made of perfluoroelastomers, such as those disclosed by Kalb et al. and Breazeale.

Disclosure of the Invention

The present invention relates to a specific improved O-ring mold which is designed to reduce or eliminate backrinding in compression molding of O-rings, especially in O-rings made of perfluoroelastomers. The mold of the present invention incorporates a conventional O-ring cavity, flash channel and flash cavity, but further incorporates an enlarged section of the flash channel adjoining the O-ring cavity. It should be understood that there generally will not be a flash channel, per se, machined or otherwise provided in the mold. Rather such a channel will be formed by the space between opposing surfaces of the mold (which surfaces are commonely known as "lands"), which space can be created by incomplete mating of the lands or by the surfaces being forced slightly apart by internal pressure. Although this effect is not completely understood, this configuration has been found to reduce or eliminate backrinding so commonly found at the parting line of the mold, particularly in O-rings made of perfluoroelastomers, such as those disclosed by Kalb et al. and Breazeale. Even if backrinding should occur, the damaged or deformed section is generally in the portion formed in the enlarged flash channel, but not on the surface of the O-ring. The enlarged flashing adjacent the O-ring can be conveniently trimmed by a conventional die cutter or by slit-trimming, i.e., where the O-ring is positioned and moved along its circumference relative to an adjacent blade.

It should be understood that the present invention includes both molds with single (either interior or exterior) and double flash cavities.

Where a double flash cavity is used, the flash channel on each side of the O-ring cavity is enlarged adjacent to the O-ring cavity. Where a single flash cavity is used, the flash channel is enlarged adjacent to the O-ring cavity, but only on the same side of the O-ring cavity as the flash cavity. Naturally, it is preferred to use molds with a double flash cavity and with enlarged flash channels on both sides of the O-ring cavity. However, where some backrinding is acceptable on one side or the other, one may choose to use a mold with only a single flash cavity and a single enlarged section of flash channel.

The dimensions of any parting line projection on the finished product are important to insure that the O-ring falls within generally accepted industry standards or specifications such as SAE (Society of Automotive Engineers) AS 871A, SAE 568A and MIL-STD 413B. Each of these standards is equivalent to the other in the portions relevant to the present invention; in particular, each requires that the parting line projection of the finished product be no wider than 0.13 mm and no longer than 0.08 mm. Accordingly, the dimensions chosen for use in the mold of the present invention will be consistent with these requirements. However, it should be understood that there can be departure from these dimensions if the finished product should be intended for a use not governed by these industry standards, or should these industry standards be modified.

Brief Description of the Drawings

FIGS. 1, 4 and 7 are cross-sectional views of various O-ring molds of the present invention. FIG. 1 shows a mold with a double flash cavity.

FIG. 4 shows a mold with a single internal flash cavity. FIG. 7 shows a mold with a single external flash cavity.

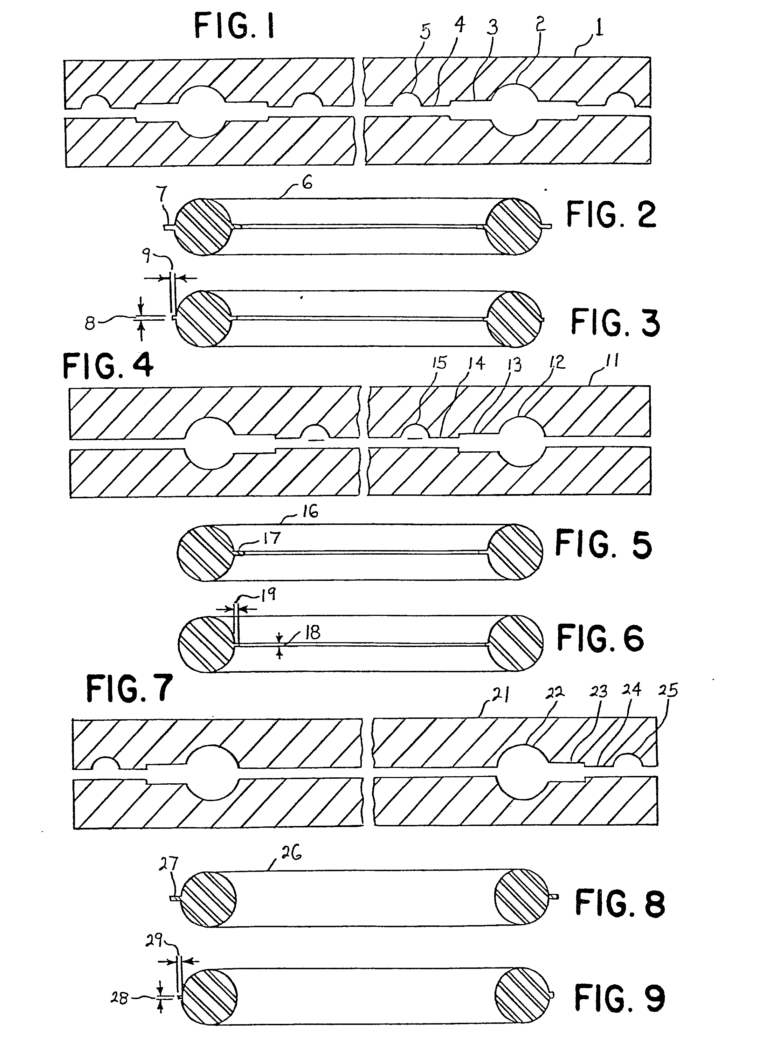

FIGS. 2, 5 and 8 show O-rings 6, 16 and 26 made in each of the molds shown in FIGS. 1, 4 and 7, respectively, in each case after stripping of the excess flash but before final trimming of the enlarged flash.

FIGS. 3, 6 and 9 show O-rings made in each of the molds shown in FIGS. 1, 4 and 7, respectively, in each case after final trimming of the enlarged flash.

It should be understood that in each of the FIGS. 1-9, dimensions are not necessarily to scale, i.e., certain dimensions are exaggerated so that the mold shape can be more readily seen. Dimensions are described in greater detail below.

Referring to FIGS. 1, 4 and 7, there are shown molds 1, 11 and 21 in which there is located an O-ring cavity 2, 12 or 22. It should be understood that while the FIGS. 1-9 show O-ring cavities with circular cross-section only, other cross-sections, e.g., square, rectangular, eliptical or v-shaped, are possible and are intended to be within the scope of the present invention. The O-ring cavity may be of any diameter as would correspond to the required cross-sectional diameter of the finished product O-ring, generally at least 0.5 mm, and perhaps as big as 20 mm, or even larger. Commercially available O-rings generally have a cross-sectional diameter of 1-10 mm. Similarly, the overall diameter of the O-ring, generally measured as inside diameter, can range from as small as 2.5 mm to as large as desired. Commercially available O-rings generally

have an inside diameter of 2.5-750 mm. It should be understood that the mold of the present invention is applicable regardless of the cross-sectional diameter or the inside diameter of the finished product O-ring.

Immediately adjacent to the O-ring cavity 2, 12 or 22, and on each side of the O-ring cavity where there is a flash cavity, 5, 15 or 25, there is located an enlarged flash channel, 3, 13 or 23. In order to conform to the industry standards referred to above, the thickness or height of the enlarged flash channel should be not larger than 0.13 mm, preferably 0.08-0.1 mm. It has been found that backrinding and damage to the finished product caused thereby is minimized when the length of the enlarged flash channel, 3, 13 or 23, is at least 0.25 mm. Although its maximum length is limited only by economics, preferably the length of the enlarged flash channel is 0.5-1.0 mm. Connecting the enlarged flash channel with the flash cavity, 5, 15 or 25, is a conventional flash channel 4, 14 or 24 with a length of about 0.5-3.8 mm, preferably 0.5-1.8 mm.

The mold of the present invention is used in substantially the same manner as would be a conventional mold. The O-ring material is extruded to give a continuous solid preform of the desired cross section slightly larger than the cross-sectional diameter of the O-ring cavity in the mold. The preform is cut and placed into the O-ring cavity of the mold. The mold is closed, compressed and heated for a predetermined time. Typical press-cure conditions include temperature of 100-300°C, with sufficient applied force to maintain mold closure, and cure time of 3 minutes - 2 hours, all depending on the particular material being cured. For a fluoroelastomer such as disclosed by Kalb et al. or Breazeale, cure conditions will be 30-45 minutes, at about 175°C, followed by post-cure. Other materials may not required post-cure.

During the compression molding cycle, excess material will be forced into the enlarged flash channel, through the conventional flash channel and into the flash cavity. Excess material formed in the conventional flash channel, usually of a thickness of 0.025 mm ~~0.001~~ inch or less, and the flash cavity can be easily stripped by hand or otherwise from the finished O-ring leaving the excess material formed in the enlarged flash channel. This excess material can then be trimmed by a conventional die cutter or by slit-trimming.

The thickness of the enlarged flash channel will determine the width 8, 18 or 28 of any parting line projection. Thus one of the two principal requirements of the industry standards is satisfied automatically. There remains the task of accurately trimming the enlarged flash 7, 17 or 27 from the O-ring so that the length 9, 19 or 29 of the parting line projection is not more than 0.08 mm. This final trimming can be accomplished with a conventional die cutter or by slit-trimming.

Industrial Applicability

The apparatus and method of the present invention are useful for the preparation of O-rings which have predetermined and precise dimensional requirements, particularly as to width and length of any parting line projection. The present invention is especially well suited for use with O-ring materials that have a tendency to backrind, such as the perfluoroelastomers disclosed by Kalb et al. and Breazeale.

Best Mode

Although the best mode of the present invention may depend upon the particular O-ring material used, the dimension of the O-ring, and its intended use, generally the most preferred embodiment of the present invention is as shown in FIG. 1 where the thickness of the enlarged flash channel is 0.1 mm, the length of the enlarged flash channel is about 0.8 mm, and the length of the conventional flash channel is about 1.3 mm.

The present invention having been described and exemplified above and in FIGS. 1-9, it should be understood that variations thereof can be made therefrom by those of ordinary skill in the art without departing from the teachings of the present application. Accordingly, reference should be made to the claims following to determine the scope of the present invention.

CLAIMS

1. A mold for forming vulcanizable material into an O-ring under elevated temperature and pressure, said mold comprising at least two mold members, each containing certain cavities such that, when the mold members are positioned together under said elevated pressure forming a parting line between said at least two members, there is formed an O-ring cavity and concentric with said O-ring cavity, at least one flash cavity, said O-ring cavity and said at least one flash cavity being connected to each other by at least one flash channel located along the parting line formed between said at least two mold members, each of said flash channels having a portion adjacent to the O-ring cavity, which portion has a thickness substantially greater than the thickness of the remainder of the flash channel.

2. The mold of claim 1 wherein the thickness of the portion of the flash channel adjacent the O-ring cavity is not greater than 0.13 mm.

3. The mold of claim 1 wherein the thickness of the portion of the flash channel adjacent the O-ring cavity is not greater than 0.1 mm.

4. The mold of claim 3 wherein the length of the portion of the flash channel adjacent the O-ring cavity is at least 0.25 mm.

5. The mold of claim 3 wherein the length of the portion of the flash channel adjacent the O-ring cavity is 0.5-1.0 mm.

6. The mold of claim 1 having two flash cavities, both concentric with the O-ring cavity, one being positioned internally and one being positioned externally with respect to said O-ring cavity, each flash cavity being connected to the O-ring cavity by a flash channel having an enlarged portion adjacent to the O-ring cavity.

7. A method of making O-ring comprising placing a solid preform of vulcanizable material within the O-ring cavity of the mold of claim 1, bringing together under elevated temperature and pressure for a predetermined amount of time the at least two members of said mold, then removing the resulting article from the mold, and trimming off the excess vulcanizable material.

FIG. 1

FIG. 2

FIG. 3

FIG. 4

FIG. 5

FIG. 6

FIG. 7

FIG. 8

FIG. 9

0047984

European Patent Office

EUROPEAN SEARCH REPORT

Application number

EP 81 10 7138.0

## DOCUMENTS CONSIDERED TO·BE RELEVANT

| Category | Citation of document with indication, where appropriate, of relevant passages | Relevant to claim |
|---|---|---|
| D | US – A – 2 148 079 (H. MARTIN) <br> * claims 1 to 3; column 1, lines 12 to 33; column 2, lines 10 to 17, 31 to 33; fig. 1 to 3 * | 1,4,7 |
| | US – A– 2 473 284 (H. J. KNAGGS) <br> * claim 1; column 4, lines 4 to 24; fig. 5 * | 1 |
| | STANDARD DIN 3770 – Runddichtringe mit besonderer Maßgenauigkeit, aus Elastomeren, 1970, BEUTH VERLAG GMBH, Berlin <br> * page 5; fig. 2 and table 3 * | 2,3 |
| A | DE – A1 – 2 437 853 (L. SEIDL) | |

### CLASSIFICATION OF THE APPLICATION (Int Cl.³)

B 29 C    1/00

### TECHNICAL FIELDS SEARCHED (Int. Cl.³)

B 29 C    1/00
B 29 H    3/00
B 29 H    5/00
B 29 H    7/00
F 16 J    15/00

### CATEGORY OF CITED DOCUMENTS

X: particularly relevant
A: technological background
O: non-written disclosure  .
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 26-11-1981 | FINDELI |

EPO Form 1503.1   06.78